(19) Europäisches Patentamt
European Patent Office
Office européen des brevets

(11) **EP 2 919 195 B1**

(12) **EUROPÄISCHE PATENTSCHRIFT**

(45) Veröffentlichungstag und Bekanntmachung des Hinweises auf die Patenterteilung:
**08.05.2019   Patentblatt 2019/19**

(51) Int Cl.:
***G06T 7/90*** *(2017.01)*

(21) Anmeldenummer: **14158638.8**

(22) Anmeldetag: **10.03.2014**

(54) **Sensoranordnung zum Bestimmen eines Farbwertes**

Sensor assembly for determining a colour value

Système de capteurs pour la détermination d'une valeur de couleur

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.09.2015   Patentblatt 2015/38**

(73) Patentinhaber: **Baumer Optronic GmbH**
**01454 Radeberg (DE)**

(72) Erfinder: **Siegel, Sebastian, Dr.**
**01309 Dresden (DE)**

(74) Vertreter: **Strauss, Steffen**
**Baumer Innotec AG**
**Hummelstrasse 17**
**Group Intellectual Property**
**8501 Frauenfeld (CH)**

(56) Entgegenhaltungen:
**US-A- 5 222 154          US-A1- 2004 090 453**
**US-A1- 2004 130 567    US-A1- 2005 129 310**
**US-A1- 2006 204 082**

**Beschreibung**

Die vorliegende Erfindung betrifft eine Sensoranordnung zum Bestimmen eines Farbwertes in einem Farbbild und ein Verfahren zum Bestimmen eines Farbwertes in einem Farbbild.

In der industriellen Bildverarbeitung ist die Auswertung von Farbbildern zunehmend von Bedeutung. In der Regel lassen sich aus einer Prüfaufgabe in der industriellen Farbbildverarbeitung konkrete Anforderungen an die Farbinspektion ableiten, beispielsweise bei der Zuordnung eines Arbeitsbereichs zu einer von mehreren vorher angelernten Farben, der Bestimmung einer dominanten Farbe in einem Arbeitsbereich oder einer Blob-Analyse, bei der eine Farbe als Entscheidungskriterium (Binarisierung) dient.

Der Vorgang des Anlernens einer Farbe für eine später auszuführende Inspektion ist bisher wenig komfortabel gelöst. Es gibt beispielsweise die Methode der sogenannten Pipette, die über einem homogenen Farbereich platziert wird und über deren Bildpunkte der mittlere Farbwert gebildet wird. Eine andere Möglichkeit besteht darin, dem Benutzer eine Farbebene darzustellen und darin einen Punkt auszuwählen. Im Allgemeinen existiert noch die Auswahl einer weiteren Dimension, wie beispielsweise Helligkeit. Andere Methoden erlauben dem Nutzer eine direkte Eingabemöglichkeit von konkreten Werten in einem Farbraum, wie beispielsweise ein konkretes Tripel in CIELAB.

Bei der Farbklassifikation handelt es sich in der Regel um die Fragestellung, durch welche Grenzen die vorkommenden Farbwerte eines Farbbildes sinnvoll in Cluster eingeteilt werden können, wenn eine bestimmte Anzahl von Farben voneinander getrennt werden soll. Eine Clusteranalyse von Bildinhalten erfolgt, indem das Bild in wenige möglichst farbhomogene Bildbereiche zerlegt wird.

Diese Ansätze tragen nur wenig zu den oben genannten Anforderungen an die industrielle Farbbildverarbeitung bei, da insbesondere die aus technischer Sicht wichtige Forderung an den Toleranzbereich einer Farbe nicht genügend berücksichtigt wird.

In der Druckschrift DE 101 40 660 A1 erfolgt beispielsweise die Definition von Farbklassen, indem jedem Punkt eines Farbraumes eine oder mehrere Farbklassen zugeordnet werden. Diese Zuordnung erfolgt in einer Lernphase. Dazu wird ein Bildbereich einer bestimmten Farbe ausgewählt. Für alle Bildpunkte dieses Bildbereichs wird dem jeweiligen Punkt des Farbraumes dieselbe Farbklasse zugeordnet. Dadurch werden die im Bild auftretenden Toleranzen der Farbe derselben Farbklasse zugewiesen. Diese tabellenorientierte Definition einer Farbklasse ist für viele Inspektionsaufgaben komplex und nachteilig in Bezug auf den Speicherbedarf.

In der Druckschrift DE 196 38 065 A1 wird eine Farbklasse als Punktwolke in einem Farbraum beschrieben. Ebenso wird eine Farbnuance als Schale um die Punktwolke eingeführt. Weitere Schalen können größere Farbnuancen beschreiben. Damit wird beschrieben, wie Farbtoleranzen rechentechnisch behandelt werden können.

In der Druckschrift DE 413 27 54 A1 wird beschrieben, wie Farbklassen durch Auswertung von Histogrammen im Wellenlängenbereich ermittelt werden.

Die Patentschrift US5,222,154 offenbart ein Verfahren zur Bestimmung der dominanten Farbe innerhalb eines Bildes, bei dem das dreidimensionale RGB Farbhistogramm ausgewertet wird. In dem vorgeschlagenen Verfahren wird das Maximum des Farbhistogramms ermittelt und es werden die Elemente innerhalb eines Toleranzbereiches um dieses Maximum ausgewertet, um so die dominante Farbe zu bestimmen.

Die der Erfindung zugrundeliegende Aufgabe besteht darin, eine Sensoranordnung und ein Verfahren anzugeben, mit denen für ein Farbbild in einem Farbraum eine dominante Farbe ermittelt werden kann.

Gemäß einem ersten Aspekt der Erfindung wird die Aufgabe durch eine Sensoranordnung zum Bestimmen eines Farbwertes in einem Farbbild nach Anspruch 1 gelöst.

Dadurch wird beispielsweise der technische Vorteil erreicht, dass aus einem Bildinhalt die dominante Farbe ermittelt werden kann. Ein Benutzer gibt dabei lediglich an, wie groß der Toleranzbereich der aufzufindenden Farbe sein soll. Störungen der eigentlichen Farbe, wie diese beispielsweise durch Bedruckung, Kratzer, Reflexionen oder Verschmutzung im Bildbereich auftreten können, werden durch die Sensoranordnung ignoriert. In einer Erweiterung können auch mehrere verschiedene Farben ermittelt werden und Abschätzungen an die Toleranzgrenzen gefunden werden. Mit der Sensoranordnung wird der Vorgang des Anlernens von Farben einfach, komfortabel und robust gelöst.

In einer vorteilhaften Ausführungsform der Sensoranordnung ist die Parameterraumerzeugungseinrichtung ausgebildet, die Häufigkeitsverteilung innerhalb des vorbestimmten Toleranzbereiches mit einer Wichtungsfunktion zu gewichten. Dadurch wird beispielsweise der technische Vorteil erreicht, dass die Werte der Häufigkeitsverteilung unterschiedlich gewichtet werden und sich ein Parameterraum mit deutlichen Maxima erzeugen lässt.

In einer weiteren vorteilhaften Ausführungsform der Sensoranordnung nimmt die Gewichtung durch die Wichtungsfunktion zu den Grenzen des Toleranzbereiches hin ab. Dadurch wird beispielsweise der technische Vorteil erreicht, dass Werte der Verteilungsfunktion am Rand des Toleranzbereiches mit einem geringeren Gewicht in die Berechnung eingehen.

In einer weiteren vorteilhaften Ausführungsform der Sensoranordnung ist die Gewichtung durch die Wichtungsfunktion im Zentrum des Toleranzbereiches maximal. Dadurch wird beispielsweise der technische Vorteil erreicht, dass Werte im Zentrum des Toleranzbereiches mit einem höheren Gewicht in die Berechnung eingehen.

In einer weiteren vorteilhaften Ausführungsform der Sensoranordnung liegen die Zentralfarbwerte auf einem Raster im Farbraum. Dadurch wird beispielsweise der technische Vorteil erreicht, dass sich eine Rechenzeit zum Erzeugen des Parameterraums verringert.

In einer weiteren vorteilhaften Ausführungsform der Sensoranordnung liegen Rasterpunkte des Rasters äquidistant zueinander. Dadurch wird beispielsweise der technische Vorteil erreicht, dass ein Parameterraum auf Grundlage gleichmäßig verteilter Werte erzeugt werden kann.

In einer weiteren vorteilhaften Ausführungsform der Sensoranordnung ist ein Definitionsbereich der Häufigkeitsverteilung oder des Parameterraumes durch vorbestimmte Schwellwerte eingegrenzt. Dadurch wird beispielsweise der technische Vorteil erreicht, dass sich ein Speicherbedarf verringert.

In einer weiteren vorteilhaften Ausführungsform der Sensoranordnung ist die Auswerteeinrichtung ausgebildet, eine Häufigkeitsverteilung aus den Bildpunktfarbwerten eines vorbestimmten Bildbereiches zu erzeugen. Dadurch wird beispielsweise der technische Vorteil erreicht, dass ein vorbestimmter Bildbereich bearbeitet wird und sich eine Rechenzeit verkürzt.

In einer weiteren vorteilhaften Ausführungsform der Sensoranordnung ist der Toleranzbereich durch einen euklidischen Abstand zu einem zentralen Farbwert oder durch einen Wertebereich in einem Farbraum definiert. Dadurch wird beispielsweise der technische Vorteil erreicht, dass eine Kugel oder ein Quader im Farbraum beschrieben wird, in dem die Häufigkeitsverteilung aufsummiert wird.

In einer weiteren vorteilhaften Ausführungsform der Sensoranordnung ist das Maximum ein globales oder lokales Maximum im Parameterraum. Dadurch wird beispielsweise der technische Vorteil erreicht, dass sich dominante Farben auf einfache Weise ermitteln lassen.

In einer weiteren vorteilhaften Ausführungsform der Sensoranordnung sind die Bildpunktfarbwerte RGB-Farbwerte, Lab-Farbwerte, LCh-Farbwerte, HSV-Farbwerte, XYZ-Farbwerte oder YUV-Farbwerte. Dadurch wird beispielsweise der technische Vorteil erreicht, dass besonders geeignete Farbräume verwendet werden.

Gemäß einem zweiten Aspekt der Erfindung wird die Aufgabe durch ein Verfahren zum Bestimmen eines Farbwertes in einem Farbbild nach Anspruch 9 gelöst.

In einer vorteilhaften Ausführungsform des Verfahrens wird die Häufigkeitsverteilung innerhalb des vorbestimmten Toleranzbereiches mit einer Wichtungsfunktion gewichtet. Dadurch wird beispielsweise ebenfalls der technische Vorteil erreicht, dass die Werte der Häufigkeitsverteilung unterschiedlich gewichtet werden und sich ein Parameterraum mit deutlichen Maxima erzeugen lässt.

In einer weiteren vorteilhaften Ausführungsform des Verfahrens wird die Häufigkeitsverteilung aus den Bildpunktfarbwerten eines vorbestimmten Bildbereiches erzeugt. Dadurch wird beispielsweise der technische Vorteil erreicht, dass ein vorbestimmter Bildbereich bearbeitet wird und sich eine Rechenzeit verkürzt.

Gemäß einem dritten Aspekt der Erfindung wird die Aufgabe durch ein Computerprogrammprodukt gelöst, das direkt in den internen Speicher eines digitalen Computers ladbar ist, und das Programmabschnitte umfasst, mit denen das Verfahren nach dem zweiten Aspekt ausgeführt wird, wenn das Programm in einem Computer ausgeführt wird. Dadurch wird beispielsweise der gleiche technische Vorteil erreicht, wie durch das Verfahren.

Ausführungsbeispiele der Erfindung sind in den Zeichnungen dargestellt und werden im Folgenden näher beschrieben.

Es zeigen:

Fig. 1      eine schematische Ansicht einer Sensoranordnung;

Fig. 2      ein Blockdiagramm eines Verfahrens;

Fig. 3      einen Arbeitsbereich mit mehreren dominanten Farben;

Fig. 4      eine Überdeckung der ersten zehn Farbklassen aus dem Arbeitsbereich; und

Fig. 5      ein Farbbild mit 24 dominanten Farben.

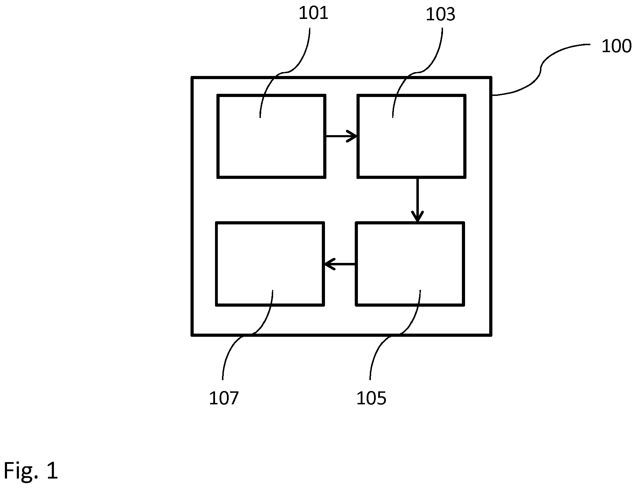

Fig. 1 zeigt eine schematische Ansicht einer Sensoranordnung 100 zum Bestimmen eines Farbwertes in einem Farbbild. Beim Begriff der Farbe handelt es sich aus technischer Sicht jeweils um einen Farbbereich, also einen Toleranzbereich. Zu diesem Zweck umfasst die Sensoranordnung 100 einen digitalen Bildsensor 101, der die einzelnen Bildpunkte des Farbbildes erfasst und zu jedem Bildpunkt die jeweiligen Bildpunktfarbwerte in einem Farbraum liefert, wie beispielsweise RGB-Farbwerte oder YUV-Farbwerte. Der Bildsensor 101 ist beispielsweise durch einen CCD-Chip oder einen CMOS-Chip gebildet. Die ermittelten Bildpunktfarbwerte für die einzelnen Bildpunkte werden anschließend als digitale Werte in einem elektronischen Speicher abgelegt.

Anschließend ermittelt eine Auswerteeinrichtung 103 eine Häufigkeitsverteilung für jeden Punkt im Farbraum auf Grundlage der jeweiligen Bildpunktfarbwerte. Die Häufigkeitsverteilung gibt für jeden Farbwert an, wie oft dieser im Farbbild vorkommt. Eine Parameterraumerzeugungseinrichtung 105 summiert die gewonnene Häufigkeitsverteilung innerhalb eines vorbestimmten Toleranzbereiches um bestimmte Zentralfarbwerte herum auf. Der Toleranzbereich wird beispielsweise zuvor von einem Benutzer angegeben. Als Zentralfarbwerte können nacheinander alle Punkte des Farbraums ausgewählt werden, so dass die Parameterraumerzeugungseinrichtung 105 um jeden Punkt des Farbraums herum aufsummiert. Als Zentralfarbwerte können jedoch auch nur einzelne Punkte des Farbraums ausgewählt werden, so dass die Parameterraumerzeugungseinrichtung 105 um diskrete Punkte des Farbraums herum aufsummiert und die Rechenzeit verringert wird, beispielsweise in einem Raster des Farbraums.

Anschließend bestimmt eine Bestimmungseinrichtung 107 ein globales oder lokales Maximum im Parameterraum und ermittelt den zu diesem Maximum gehörenden Farbwert. Die Auswerteeinrichtung 103, die Parameterraumerzeugungseinrichtung 105 und die Bestimmungseinrichtung 107 können durch einen Prozessor gebildet sein, der auf die digitalen Werte in dem elektronischen Speicher zugreift und durch ein Programm gesteuert wird. Auf diese Weise lassen sich mit hoher Störungsunempfindlichkeit dominierende Farben in dem Farbbild ermitteln. Die dominierende Farbe ist dabei diejenige Farbe, die den größten Flächenanteil einnimmt.

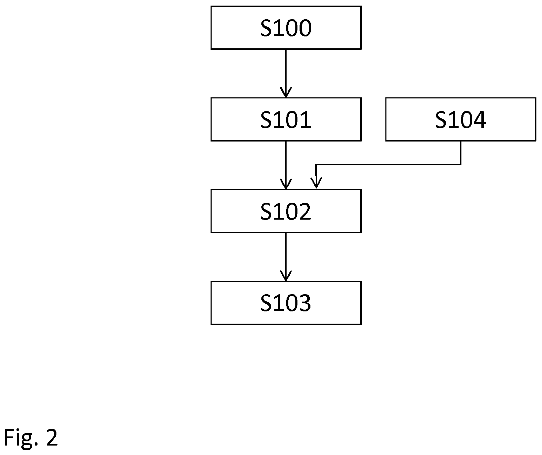

Fig. 2 zeigt ein Blockdiagramm eines Verfahrens zum Bestimmen eines Farbwertes. Das Verfahren kann beispielsweise im CIELAB-Farbraum durchgeführt werden, im Folgenden Lab-Raum genannt. In gleicher Weise kann das Verfahren auch in anderen Farbräumen ausgeführt werden.

Zunächst wird in einem Schritt S100 ein Farbbild aus einer Anzahl von Bildpunktfarbwerten als Lab-Tripel gewonnen. Im Schritt S101 wird anschließend eine Häufigkeitsverteilung $A$ aller Farbwerte in dem Farbbild ermittelt:

$$(1) \quad A(L', a', b') = \sum_{(x,y)\in I} \begin{cases} 1 & \text{falls } L' = L(x,y) \text{ und } a' = a(x,y) \text{ und } b' = b(x,y), \\ 0 & \text{sonst} \end{cases}$$

Jeder Bildpunkt ist durch die Koordinaten $(x, y)$ ansprechbar. Die Parameter $L(x, y)$, $a(x, y)$ und $b(x, y)$ beschreiben die Farbe des Bildpunktes als Position (Koordinate) im Lab-Raum. Die Häufigkeitsverteilung $A$ gibt somit für jede konkrete Farbe $(L', a', b')$ des Lab-Raumes an, wie viele Bildpunkte des Farbbildes genau diesen Farbwert aufweisen. Insofern kann die Häufigkeitsverteilung $A$ auch als Farb-Histogramm bezeichnet werden.

Würde ein Farbbild beispielsweise genau drei Farben mit jeweils einem homogenen Farbwert aufweisen, so hätte die Häufigkeitsverteilung genau drei Einträge, die größer als Null wären. Die dominante Farbe wäre dann durch die Position bestimmt, an der die Häufigkeitsverteilung ihr Maximum annimmt. In der Realität streuen die Farbwerte einer augenscheinlich homogen erscheinenden Farbfläche, so dass eine Verteilung von Farbwerten vorliegt.

Um dennoch eine dominante Farbe ermitteln zu können, wird je nach Farbraum und Erwartung an die Homogenität einer Farbklasse in Schritt S104 ein Toleranzbereich vorgegeben. Beispielsweise kann eine Farbe "rot" vom Anwender dadurch definiert werden, dass diese gewisse Toleranzen in Bezug auf die Helligkeit, die Sättigung und den Farbton aufweist. Solche Toleranzen lassen sich in der jeweiligen Erfassung der Farbe in einem technischen Modell in einem Farbraum mitangeben. Im Allgemeinen hat der Anwender konkrete Vorstellungen an den Toleranzbereich einer Farbe.

Wird beispielsweise die Aufgabe betrachtet, eine Zweifarb-LED mit den Farben rot und grün zu kontrollieren, so kann für die Unterscheidung, ob die LED rot oder grün leuchtet, ein vergleichsweise großer Toleranzbereich für die beiden Farben gewählt werden. Allerdings gibt es Fehlerfälle, in denen die LED gelb oder orange leuchten kann. In diesem Fall wird der Toleranzbereich für die Farben rot und grün soweit eingeschränkt, dass die Fehlerfarben nicht darin enthalten sind. Soll hingegen auch die Farbtreue inspiziert werden, so wird der Anwender den Toleranzbereich entsprechend seiner Vorstellung an die Farbtoleranz entsprechend klein wählen.

Eine Farbklasse ist durch eine konkrete Zentralfarbe und einen Toleranzbereich um diese Zentralfarbe im jeweiligen Farbraum definiert. Eine Farbklasse wird beispielsweise im RGB-Farbraum durch eine Zentralfarbe mit $R=170$, $G=80$, $G=40$ und einen Toleranzbereich von $\Delta R \leq 20$, $\Delta G \leq 20$, $\Delta B \leq 15$, eine Zentralfarbe im Lab-Farbraum mit $L=45$, $a=36$, $b=41$ und einen Toleranzbereich von $\Delta E \leq 20$ oder eine Zentralfarbe im LCh-Farbraum von $L=45$, $C=54$, $h=49°$ und einen Toleranzbereich von $\Delta L \leq 20$, $\Delta 15$, $\Delta h \leq 15°$ definiert.

Zum Beispiel kann an die Farbklassen die Forderung gestellt werden, dass alle Farbwerte innerhalb der Farbklasse um höchstens $\Delta E$ von einer Zentralfarbe der Farbklasse abweichen. Damit ist eine Farbklasse als eine Kugel im Lab-Raum beschrieben, deren Radius $\Delta E$ beträgt und deren Zentrum die Zentralfarbe der Farbklasse darstellt. Eine dominierende Farbklasse ist dadurch gekennzeichnet, dass dieser die meisten Bildpunkte des Farbbildes angehören.

In einem weiteren Schritt S102 wird gemäß folgender Formel für jede Farbe, d.h. für jede Position $(L'', a'', b'')$ des Lab-Raums, ein Wert im Parameterraum ermittelt, der angibt wie viele Bildpunkte im vorgegebenen Toleranzbereich $\Delta E$ jeder Zentralfarbe liegen, beispielsweis mit $k=1$.

(2)

$$H(L'', a'', b'') = \sum_{L'=L_{min}}^{L_{max}} \sum_{a'=a_{min}}^{a_{max}} \sum_{b'=b_{min}}^{b_{max}} \begin{cases} k * A(L', a', b') & \text{falls } (L' - L'')^2 + (a' - a'')^2 + (b' - b'')^2 \leq \Delta E_{max}^2, \\ 0 & \text{sonst} \end{cases}$$

Die Grenzen $L_{min}$, $L_{max}$, $a_{min}$, $a_{max}$, $b_{min}$ und $b_{max}$ spannen dabei den Lab-Raum auf.

Im Schritt S103 erfolgt die Auswertung des Parameterraums. Die Position, an der der Parameterraum das Maximum annimmt, stellt die dominante Farbe des Farbbildes dar, da die meisten Bildpunkte im Toleranzbereich dieser Farbe liegen. Diese Position ist gleichbedeutend mit der Zentralfarbe. Die dominante Farbe mit ihrem Toleranzbereich beschreibt dann die Farbklasse, der die meisten Bildpunkte zugeordnet werden.

Die Toleranzbereichsgrenzen können je nach Ausführung und Farbraum auch auf andere Weise definiert werden. Zum Beispiel können konkrete Schranken vorgegeben werden, so dass die obere Bedingung in (2) wie folgt aussieht:

(3)        … falls $|L' - L''| \leq \Delta L_{max}$ und $|a' - a''| \leq \Delta a_{max}$ und $|b' - b''| \leq \Delta b_{max}$.

Solche Bedingungen lassen sich auch in allen anderen Farbräumen, wie beispielsweise LCh, RGB, HSV, YUV, XYZ, anwenden. Beispielsweise lässt sich im LCh-Farbraum eine Toleranz für die Helligkeit, die Sättigung und den Farbwinkel vorgeben. Der Toleranzbereich entspricht dann einem Hohlzylindersektor im LCh-Raum.

Weiterhin kann an den Toleranzbereich die Forderung gestellt werden, dass die auftretenden Farben nahe der Zentralfarbe höher gewichtet werden als entferntere Farben. Diese Forderung kann realisiert werden, indem $k$ in (2) nicht mehr eine Konstante darstellt, sondern durch folgende Wichtungsfunktion ersetzt wird:

(4)        $k(\Delta L, \Delta a, \Delta b)$, wobei $\Delta L = |L' - L''|$, $\Delta a = |a' - a''|$ und $\Delta b = |b' - b''|$.

Eine konkrete Ausprägung könnte beispielsweise lauten:

$$k(\Delta L, \Delta a, \Delta b) = 1/(\Delta L^2 + \Delta a^2 + \Delta b^2).$$

Andere Ausprägungen können eine Gauß-Verteilung zugrunde legen, etwa in der Form:

$$k(\Delta L, \Delta a, \Delta b) = \frac{1}{\sqrt{2\pi\sigma^2}} e^{-\frac{(\Delta L^2 + \Delta a^2 + \Delta b^2)}{2\sigma^2}}.$$

Solche Wichtungen lassen sich auch in allen anderen Farbräumen anwenden, indem ein entsprechendes Abstandsmaß zwischen zwei Farben im Farbraum zur Anwendung kommt.

Die Anwendung einer höheren Wichtung für Farben nahe dem Zentrum des Toleranzbereichs bewirkt zum Beispiel, dass stark rauschende Bereiche wie beispielsweise ein dunkler Bildhintergrund benachteiligt werden. Für einen solchen Bereich können dann mehr Bildpunkte in einer Toleranzumgebung liegen als für eine sinnvolle homogenere Farbe. Trotzdem würde eventuell eine homogenere Farbe als dominante Farbe ermittelt, da deren Bildpunkte in (2) durch Anwendung von (4) höher gewichtet werden. Vor allem, wenn das Verfahren angewendet wird, um neben der ersten Farbklasse als dominante Farbe auch weitere Farbklassen im Bild zu ermitteln, führt die Wichtung zu einer Reduktion von störenden Farbklassen, beispielsweise durch den Bildhintergrund.

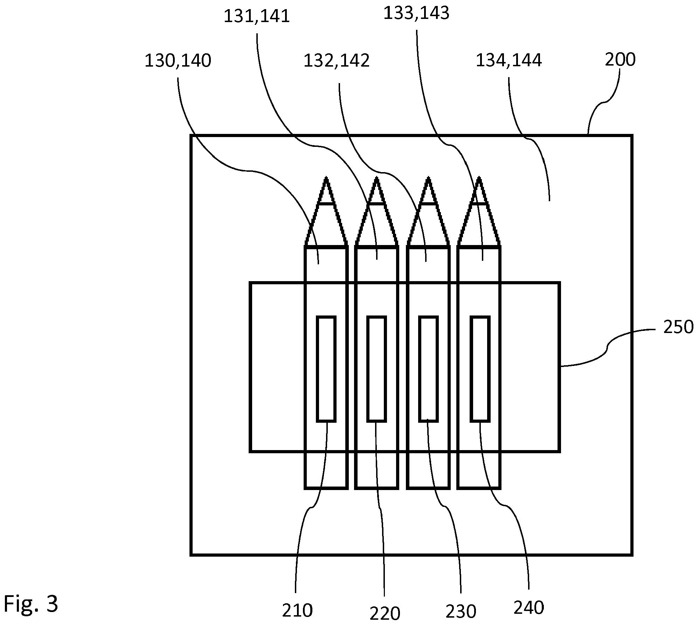

Fig. 3 zeigt einen Arbeitsbereich 250 mit mehreren dominanten Farben 130, 131, 132, 133 und 134. Nach dem oben beschriebenen Verfahren zeigt das Maximum im Parameterraum die dominante Farbe im Farbbild. Im Farbbild 200 können die dominanten Farben 130, 131, 132, 133 und 134 jedoch auch einzeln ermittelt werden, indem über jedem weitgehend homogenen Farbbereich 140, 141, 142, 143 und 144 jeweils ein einzelner Arbeitsbereich 210, 220, 230, 240 und 250 als Bildausschnitt ausgewertet wird.

Allerdings können weitere Farbklassen 109 und mehrere dominante Farben 130, 131, 132, 133 und 134 in einem Arbeitsbereich 250 auch direkt ermittelt werden. Zunächst wird das oben beschriebene Verfahren angewendet, um die erste dominante Farbklasse 120 zu ermitteln. Im Arbeitsbereich 250 ist dies beispielsweise der weitgehend homogene Hintergrund 144. Anschließend wird die gefundene dominante Farbklasse 120 aus dem Parameterraum entfernt.

So wie in Formel (2) Terme der Form $k*A(L', a', b')$ zum Parameterraum addiert worden sind, werden in diesem Fall dieselben Terme subtrahiert für alle Farben (Kombinationen aus *L', a'* und *b')*, die innerhalb der ersten gefundenen Farbklasse 120 liegen. Damit ist der Einfluss aller Bildpunkte revidiert, deren Farbwerte innerhalb der ersten Farbklasse 120 liegen.

Anschließend werden noch alle Einträge im Parameterraum auf null gesetzt, deren Position innerhalb der ersten Farbklasse 120 liegt. Dadurch wird der Einfluss auf die erste Farbklasse 120 von Farben revidiert, die etwas außerhalb der ersten Farbklasse 120 liegen. Nun wird im Parameterraum erneut das Maximum gesucht. Dieses repräsentiert die Farbklasse 121 der zweiten dominanten Farbe. Dieses Verfahren stellt eine Erweiterung des Schritts S103 dar und kann beliebig oft wiederholt werden. Dabei werden in absteigender Signifikanz alle Farbklassen des Farbbildes geliefert.

Bei der Auswertung des Farbbildes 200 kann für jeden Bildpunkt des Farbbildes 200 oder des Arbeitsbereichs 210, 220, 230, 240 oder 250 eine Zuordnung zu einer vorher gelernten Farbklasse 109 getroffen werden, sofern der Bildpunkt in den Toleranzbereich einer Farbklasse 109 fällt. Bei sich überschneidenden Farbklassen 109 kann vorzugsweise die Farbklasse 109 ausgewählt werden, deren Farbzentrum der Farbe des Bildpunkts am nächsten ist. Es ist auch möglich, dass der Bildpunkt in keinen Toleranzbereich der gelernten Farbklassen 109 fällt.

Eine Anwendung kann beispielsweise dazu dienen, die Anwesenheit von Buntstiften in einer Packung zu prüfen, indem im Bild über jeder Stiftposition der Packung ein Arbeitsbereich 210, 220, 230, 240 und 250 ausgewertet wird. Ist für jede Stiftfarbe zuvor genau eine Farbklasse 109 definiert worden, so kann für jeden Arbeitsbereich 210, 220, 230, 240 und 250 ein Überdeckungsmaß zu allen Farbklassen 109 angegeben werden, d.h. die Anzahl der Bildpunkte, die einer konkreten Farbklasse 109 zugeordnet worden sind. Aus den Überdeckungswerten kann durch Schwellwertbildung die Anwesenheit des dort erwarteten Buntstiftes nachgewiesen werden. Gibt es zehn verschiedene Stiftfarben, so werden zunächst diese zehn Farben als Farbklassen 109 bekannt gemacht. Das Verfahren ermöglicht es auf einfache Weise die jeweiligen Farbklassen 109 mithilfe von Beispielbildern zu lernen.

Eine andere Anwendung kann beispielsweise die dominante Farbe in einem Bild oder Arbeitsbereich ermitteln. Diese Anwendung kann dazu dienen, auf weitgehend farbhomogenen Deckeln, beispielsweise Flaschendeckeln, die Deckelfarbe zu ermitteln, auch wenn der Deckel Störungen in Form von Aufdrucken, Kratzern, Verschmutzungen oder Reflexionen aufweist. Das Verfahren funktioniert immer dann robust, wenn die Störung im Bild oder Arbeitsbereich flächenmäßig seltener auftritt, als die eigentliche Deckelfarbe mit dem Toleranzbereich. Sofern die Störung inhomogene oder stark streuende Farben aufweist, kann das Verfahren auch dann die Deckelfarbe ermitteln, wenn diese flächenmäßig kleiner im Bild erscheint. In diesem Fall nehmen die Störungen mehr Fläche ein, aber den Störungen kann keine dominante Farbe zugeordnet werden. Das Verfahren liefert dann die dominante Farbe unter vorheriger Angabe für die Grenzen eines Toleranzbereichs, beispielsweise für $\Delta E \leq 20$, ohne vorher Farben bekannt machen zu müssen. Wird der Arbeitsbereich 210, 220, 230 oder 240 auf den Bildinhalt eines Buntstiftes einer Packung beschränkt, so dient das Verfahren dazu, die Farbe des Buntstiftes zu ermitteln.

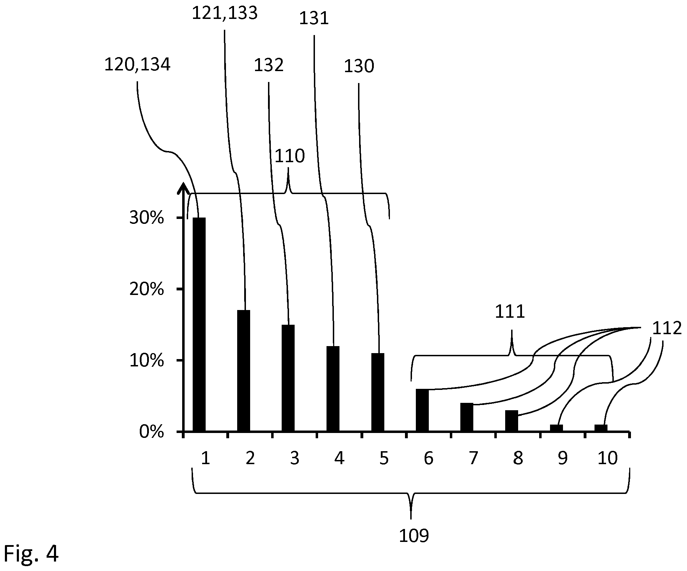

Fig. 4 zeigt eine Überdeckung der ersten zehn Farbklassen 109 aus dem Arbeitsbereich 250 nach diesem Verfahren. Für jede Farbklasse wird eine Überdeckung ermittelt. Diese ist der Quotient aus der Summe aller *A(L', a', b)* über alle Farben (Kombinationen aus *L', a'und b)*, die innerhalb der Farbklasse liegen (Zähler), und der Anzahl der Bildpunkte des Arbeitsbereichs (Nenner). Der Arbeitsbereich 250 führt zunächst zu fünf dominanten Farben 110, 130, 131, 132, 133, 134, d.h. Hintergrund 134 sowie vier Stiftfarben 130, 131, 132, 133. Beispielsweise können dieses Stiftfarben blau 130, rot 131, grün 132 und gelb 133 sowie der Hintergrund in der Farbe grau 134 sein.

Die nächsten fünf Farben 111 zeigen Nebenmaxima im Parameterraum, da im Beispiel jede der fünf Farben 110, 130, 131, 132, 133, 134 durch eine weniger relevante Störfarbe 112 beeinflusst ist. Daran wird ersichtlich, dass Störungen, wie beispielsweise durch einen Aufdruck, Kratzer, Schmutz oder Reflexionen, die dominante Farbe nicht negativ beeinflussen, sofern diese Störungen zu Bildpunkten führen, deren Farbwerte außerhalb des Toleranzbereichs der dominanten Farbe liegen.

Die beschriebenen Schritte können rechen- und speicherintensiv sein. Sofern diese Prozesse den Lernvorgang von Farbklassen 109 unterstützen sollen, so gibt es dabei in der Regel keine Echtzeitanforderung, so dass ein Personal Computer PC diese Schritte hinreichend schnell ausführen kann.

Der Schritt S102 kann vorzugsweise in folgender Weise realisiert werden.

1. Der Parameterraum *H* wird mit Null initialisiert.

2. Für jede Position *(L', a', b')* in der Häufigkeitsverteilung *A* für die *A(L', a', b')* > 0 gilt, wird der Parameterraum in der lokalen Umgebung, d.h. dem Toleranzbereich um die Position *(L', a', b')*, um den Wert *k\*A(L', a', b')* inkrementiert. Die relativen Positionen dieser lokalen Umgebung können vorher berechnet und als Tabelle abgelegt und dann direkt genutzt werden. Auf softwarebasierten Rechenarchitekturen, z.B. CPUs, DSPs, ist eine effiziente Implementierung unter Anwendung von Techniken für Software-Pipelining von Programmschleifen und optimaler Datencache-Nutzung möglich.

Insbesondere bei begrenztem Speicher kann der Definitionsbereich der Häufigkeitsverteilung und des Parameterraumes reduziert werden. Der Lab-Farbraum könnte beispielsweise durch folgende Schwellen definiert sein: $L_{min}$ = 0, $L_{max}$ = 100, $a_{min}$ = -80, $a_{max}$ = 94, $b_{min}$ = -113 und $b_{max}$ = 94. Bei Ganzzahligkeit der Farbwerte ergeben sich damit 101 * 175 * 208 = 3 676 400 verschiedene Farbwerte. Die Reduktion der Definitionsbereiche kann als Kachelung des Lab-Farbraumes beschrieben werden. Werden immer Werte derselben Kachel zugeordnet, so lässt sich die Formel (1) neu formulieren als:

$$(5) \qquad A(\bar{L}', \bar{a}', \bar{b}') = \sum\nolimits_{(x,y) \in I} \begin{cases} 1 & \text{falls } \bar{L}' = \left\lfloor \frac{L(x,y)}{n} \right\rfloor \text{ und } \bar{a}' = \left\lfloor \frac{a(x,y)}{n} \right\rfloor \text{ und } \bar{b}' = \left\lfloor \frac{b(x,y)}{n} \right\rfloor, \\ 0 & \text{sonst} \end{cases}$$

Vorzugsweise wählt man $n=2^m$ mit $m \in N$ für eine technische Realisierung. Bei $n=4$ reduzieren sich die Definitionsbereiche, d.h. alle sinnvollen Kombinationen aus $\bar{L}'$, $\bar{a}'$, $\bar{b}'$ der Häufigkeitsverteilung $A$ und des Parameterraumes $H$ auf 26 * 44 * 52 = 59488 Positionen. Formel (2) wird dann ebenfalls nur noch in den reduzierten Räumen gerechnet.

Die beschriebene Kachelung führt zu einer Reduktion der Genauigkeit. Die Kachel der dominanten Farbe wird im Allgemeinen mit ausreichender Genauigkeit ermittelt, die Position der Farbe innerhalb der Kachel, d.h. das Zentrum des Toleranzbereichs, geht zunächst verloren. Damit kann die dominante Farbe nur mit reduzierter Genauigkeit angegeben werden, z. B. mit $L' = n * \bar{L}' + \frac{n}{2}$ , $a' = n * \bar{a}' + \frac{n}{2}$ und $b' = n * \bar{b}' + \frac{n}{2}$. Dieser Nachteil kann durch folgende Erweiterung weitgehend aufgehoben werden:

$$(6) \qquad A_L(\bar{L}', \bar{a}', \bar{b}') = \sum\nolimits_{(x,y) \in I} \begin{cases} \mathrm{mod}(L(x,y), n) & \text{falls } \bar{L}' = \left\lfloor \frac{L(x,y)}{n} \right\rfloor \text{ und } \bar{a}' = \left\lfloor \frac{a(x,y)}{n} \right\rfloor \text{ und } \bar{b}' = \left\lfloor \frac{b(x,y)}{n} \right\rfloor, \\ 0 & \text{sonst} \end{cases}$$

$$(7) \qquad A_a(\bar{L}', \bar{a}', \bar{b}') = \sum\nolimits_{(x,y) \in I} \begin{cases} \mathrm{mod}(a(x,y), n) & \text{falls } \bar{L}' = \left\lfloor \frac{L(x,y)}{n} \right\rfloor \text{ und } \bar{a}' = \left\lfloor \frac{a(x,y)}{n} \right\rfloor \text{ und } \bar{b}' = \left\lfloor \frac{b(x,y)}{n} \right\rfloor, \\ 0 & \text{sonst} \end{cases}$$

$$(8) \qquad A_b(\bar{L}', \bar{a}', \bar{b}') = \sum\nolimits_{(x,y) \in I} \begin{cases} \mathrm{mod}(b(x,y), n) & \text{falls } \bar{L}' = \left\lfloor \frac{L(x,y)}{n} \right\rfloor \text{ und } \bar{a}' = \left\lfloor \frac{a(x,y)}{n} \right\rfloor \text{ und } \bar{b}' = \left\lfloor \frac{b(x,y)}{n} \right\rfloor, \\ 0 & \text{sonst} \end{cases}$$

Mit (6) bis (8) werden die Reste der durch die Kachelung eingeführten Division berücksichtigt. Für $n=4$ werden beispielsweise Terme der Größe {0, 1, 2, 3} akkumuliert. Der genauere Lab-Wert der dominanten Farbe wird dann ermittelt, indem für die Position ($\bar{L}'$, $\bar{a}'$, $\bar{b}'$) einer dominanten Farbe die genauere Position wie folgt ermittelt wird:

$$(9) \qquad L' = n * \bar{L}' + \frac{A_L(\bar{L}', \bar{a}', \bar{b}')}{A(\bar{L}', \bar{a}', \bar{b}')}, \qquad a' = n * \bar{a}' + \frac{A_a(\bar{L}', \bar{a}', \bar{b}')}{A(\bar{L}', \bar{a}', \bar{b}')} \quad \text{und} \quad b' = n * \bar{b}' + \frac{A_b(\bar{L}', \bar{a}', \bar{b}')}{A(\bar{L}', \bar{a}', \bar{b}')}.$$

Alternativ können auch mehrere Kacheln in der Umgebung von ($\bar{L}'$, $\bar{a}'$, $\bar{b}'$) ausgewertet werden.

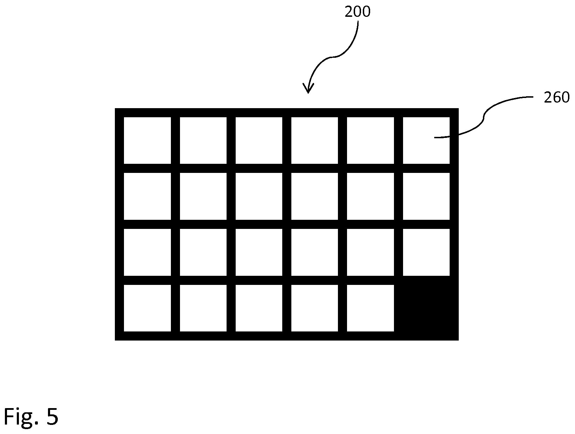

Fig. 5 zeigt ein Farbbild 200 mit 24 dominanten Farben 260 nach absteigender Überdeckung sortiert. Nach dem beschriebenen Verfahren können mit $n=4$ die ersten 24 dominanten Farben 260 zuverlässig ermittelt werden. Jede der 24 gefundenen Farben mit dem Toleranzbereich $\Delta E$ = 8 im Lab-Farbraum beschreibt die Bildpunkte eines Farbfeldes im Originalbild. Die erste gefundene Farbe (dunkles Schwarz) repräsentiert das Farbfeld unten rechts und gleichzeitig den Hintergrund, der durch Bereiche zwischen den Farbfeldern gebildet wird.

Um einem Benutzer grafisch anzuzeigen, welchen Einfluss die Schwellen bei der Wahl des Toleranzbereichs haben, kann ein Histogramm dienen. Dabei wird für eine Farbklasse ein Histogramm für alle Bildpunkte des Farbbildes, die innerhalb der Toleranzklasse liegen, über $\Delta E$ gebildet. Aus diesem Histogramm wird ersichtlich, wie stark die Farbwerte innerhalb der Farbklasse streuen. Solche Histogramme lassen sich auch über einzelnen Farbkanälen im jeweiligen Farbraum, beispielsweise $\Delta L, \Delta C, \Delta h$ angeben. Diese Histogramme können auch die Wahl einer Wichtungsfunktion (4) unterstützen.

Aus den Histogrammen lassen sich auch automatisiert sinnvolle Grenzen für einen Toleranzbereich ableiten. Weiterhin kann ein Markieren aller Bildpunkte im Bild, deren Farbwerte innerhalb einer Farbklasse liegen, den Einfluss von Toleranzschwellen verdeutlichen. Beispielsweise könnten die Bildpunkte der zur ersten dominanten Farbe gehörenden Farbklasse markiert werden. Ändert der Nutzer die Toleranzschwelle, d.h. verringert dieser $\Delta E_{max}$, so wird durch eine Darstellung des neuen Ergebnisses sofort sichtbar, inwieweit die bisher markierten Bildpunkte noch der dominanten Farbe angehören. Das bisher beschriebene Verfahren kann auch auf Grauwertbildern oder Intensitätsbildern eingesetzt werden, so dass sich der dominante Grauwert ermitteln lässt.

Durch die Sensoranordnung und das Verfahren wird die Aufgabe gelöst, in einem vom Benutzer vorgegebenen Farbraum und Toleranzbereich die größte Farbklasse mit einer dominanten Farbe zu ermitteln. Die dominante Farbe ist dadurch gekennzeichnet, dass dieser die meisten Bildpunkte des Arbeitsbereichs angehören. Liegen in einem Arbeitsbereich mehrere dominante Farben vor, so können mit dem Verfahren auch alle weiteren Farbklassen mit absteigender Signifikanz ermittelt werden. Das Verfahren hat den technischen Vorteil, dass Störungen im Bild, beispielsweise durch einen Aufdruck, Kratzer, Flecken oder Reflexionen, den Farbwert der dominanten Farbe nicht beeinflussen.

Mögliche Erweiterungen des Verfahrens liegen beispielsweise in der Bestimmung mehrerer Farben nacheinander, in der Anwendung des Verfahrens auf einen Bildausschnitt oder Bildbereich beliebiger Form oder in der Ausgabe eines Überdeckungsmaßes für jede Farbklasse bezogen auf die Bildpunkte eines Arbeitsbereichs. Das Verfahren kann in beliebigen Farbräumen und auf Farb- oder Intensitätsbilder angewendet werden, wie beispielsweise Grauwertbilder. Für die Toleranzbereiche lassen sich beliebige Beschreibungen oder Metriken einsetzen. Eine Kachelung oder Rasterung der Farbräume kann zur Verringerung der auszuführenden Rechenoperationen verwendet werden. Restterme lassen sich bei der Kachelung der Farbräume mitführen. Zudem kann eine Histogrammdarstellung der Toleranzbereiche verwendet werden. Das Verfahren kann eine automatische Ermittlung eines Toleranzbereichs der ersten dominanten Farbe ermöglichen, beispielsweise mithilfe der Auswertung des Histogramms. Innerhalb des Parameterraums lässt sich eine Wichtungsfunktion einführen. Das Verfahren lässt sich auf einem Field Programmable Gate Array (FPGA) durchführen.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Verfahrensschritte können durch Programmabschnitte eines Programms ausgeführt werden, das auf einem Computer läuft.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Sensoranordnung (100) zum Bestimmen eines Farbwertes in einem Farbbild (200), mit:

   einem Bildsensor (101) zum Erfassen von Bildpunktfarbwerten in einem Farbraum für eine Anzahl von Bildpunkten des Farbbildes (200), wobei der Farbraum ein RGB-Farbraum, Lab-Farbraum, LCh-Farbraum, HSV-Farbraum, XYZ-Farbraum oder YUV-Farbraum ist und die Bildpunktfarbwerte RGB-Farbwerte, Lab-Farbwerte, LCh-Farbwerte, HSV-Farbwerte, XYZ-Farbwerte oder YUV-Farbwerte sind;
   einer Auswerteeinrichtung (103) zum Erzeugen einer Häufigkeitsverteilung für jeden Punkt im Farbraum auf Basis der Bildpunktfarbwerte;
   einer Parameterraumerzeugungseinrichtung (105) zum Erzeugen eines Parameterraums durch Aufsummieren der Häufigkeitsverteilung innerhalb eines vorbestimmten Toleranzbereiches um bestimmte Zentralfarbwerte, wobei die Parameterraumerzeugungseinrichtung (105) ausgebildet ist, die Häufigkeitsverteilung innerhalb des vorbestimmten Toleranzbereiches mit einer Wichtungsfunktion zu gewichten, wobei der Toleranzbereich durch einen euklidischen Abstand zu den Zentralfarbwerten definiert ist; und
   einer Bestimmungseinrichtung (107) zum Bestimmen des Farbwertes anhand eines Maximums in dem Parameterraum.

2. Sensoranordnung nach Anspruch 1, wobei die Gewichtung durch die Wichtungsfunktion zu den Grenzen des Toleranzbereiches hin abnimmt.

3. Sensoranordnung nach Anspruch 1 oder 2, wobei die Gewichtung durch die Wichtungsfunktion im Zentrum des Toleranzbereiches maximal ist.

4. Sensoranordnung nach einem der vorangehenden Ansprüche, wobei die Zentralfarbwerte auf einem Raster im Farbraum liegen.

5. Sensoranordnung nach Anspruch 4, wobei Rasterpunkte des Rasters äquidistant zueinander liegen.

6. Sensoranordnung nach einem der vorangehenden Ansprüche, wobei ein Definitionsbereich der Häufigkeitsverteilung oder des Parameterraumes durch vorbestimmte Schwellwerte eingegrenzt ist.

7. Sensoranordnung nach einem der vorangehenden Ansprüche, wobei die Auswerteeinrichtung (103) ausgebildet ist, eine Häufigkeitsverteilung aus den Bildpunktfarbwerten eines vorbestimmten Bildbereiches zu erzeugen.

8. Sensoranordnung nach einem der vorangehenden Ansprüche, wobei das Maximum ein globales oder lokales Maximum im Parameterraum ist.

9. Verfahren zum Bestimmen eines Farbwertes in einem Farbbild, mit den Schritten:

   Erzeugen (S101) einer Häufigkeitsverteilung für jeden Punkt in einem Farbraum aus den Bildpunktfarbwerten der Bildpunkte des Farbbildes (200), wobei der Farbraum ein RGB-Farbraum, Lab-Farbraum, LCh-Farbraum, HSV-Farbraum, XYZ-Farbraum oder YUV-Farbraum ist und die Bildpunktfarbwerte RGB-Farbwerte, Lab-Farbwerte, LCh-Farbwerte, HSV-Farbwerte, XYZ-Farbwerte oder YUV-Farbwerte sind, wobei die Häufigkeitsverteilung innerhalb eines vorbestimmten Toleranzbereiches mit einer Wichtungsfunktion gewichtet wird.
   Erzeugen (S102) eines Parameterraums durch Aufsummieren der Häufigkeitsverteilung innerhalb des vorbestimmten Toleranzbereiches um bestimmte Zentralfarbwerte ,
   wobei der Toleranzbereich durch einen euklidischen Abstand zu den Zentralfarbwerten definiert ist; und Bestimmen (S103) des Farbwerts anhand eines Maximums in dem Parameterraum.

10. Verfahren nach Anspruch 9, wobei die Häufigkeitsverteilung aus den Bildpunktfarbwerten eines vorbestimmten Bildbereiches erzeugt wird.

11. Computerprogrammprodukt, das direkt in den internen Speicher eines digitalen Computers ladbar ist, und das Programmabschnitte umfasst, mit denen das Verfahren nach den Ansprüchen 9 bis 10 ausgeführt wird, wenn das Programm in einem Computer ausgeführt wird.

**Claims**

1. Sensor array (100) for determining a color value in a color image (200) with:

   an image sensor (101) for registering pixel color values in a color space for a number of pixels of the color image (200), where the color space is a RGB color space, Lab color space, LCh color space, HSV color space, XYZ color space or YUV color space and the pixel color values are RGB color values, Lab color values, LCh color values, HSV color values, XYZ color values or YUV color values;
   an evaluation device (103) for generating a frequency distribution for each point in the color space based on the pixel color values;
   a parameter space generating device (105) for creating a parameter space by summating the frequency distribution within a predetermined tolerance range about defined central color values, where the parameter space generating device (105) is designed to weight the frequency distribution within the predetermined tolerance range with a weighting function, whereby the tolerance range is defined by a Euclidean distance from the central color values; and
   a determination device (107) for determining the color value based on a maximum in the parameter space.

2. Sensor array in accordance with Claim 1, where the weighting with the weighting function decreases towards the limits of the tolerance range.

3. Sensor array in accordance with Claim 1 or 2, where the weighting with the weighting function is a maximum in the middle of the tolerance range.

4. Sensor array in accordance with one of the preceding claims, where the central color values lie on a grid in the color space.

5. Sensor array in accordance with Claim 4, where points on the grid are equidistant from each other.

6. Sensor array in accordance with one of the preceding claims, where a definition area of the frequency distribution or of the parameter space is limited by predetermined threshold values.

7. Sensor array in accordance with one of the preceding claims, where the evaluation device (103) is designed to generate a frequency distribution from the pixel color values of a predetermined image area.

8. Sensor array in accordance with one of the preceding claims, where the maximum is a global or local maximum in the parameter space.

9. Method for determining a color value in a color image by:

Generating (S101) a frequency distribution for each point in a color space from the pixel color values of the pixels of the color image (200), where the color space is a RGB color space, Lab color space, LCh color space, HSV color space, XYZ color space or YUV color space and the pixel color values are RGB color values, Lb color values, LCh color values, HSV color values, XYZ color values or YUV color values, where the frequency distribution is weighted with a weighting function within a predetermined tolerance range, whereby the tolerance range is defined by a Euclidean distance from the central color values;

Generating (S102) a parameter space by summating the frequency distribution within the predetermined tolerance range about defined central color values, where the tolerance range is defined by a Euclidean distance from the central color values and;

Determining (S103) the color value based on a maximum in the parameter space.

10. Method in accordance with Claim 9, where the frequency distribution is generated from the pixel color values of a predetermined image area.

11. Computer program product which is directly loadable into the internal memory of a digital computer and comprises program sections with which the method is performed in accordance with Claims 9 to 10 when the program is executed in a computer.

**Revendications**

1. Agencement de capteurs (100) permettant de déterminer une valeur de couleur dans une image en couleurs (200), comprenant :

un capteur d'images (101) permettant de détecter des valeurs de couleur de pixel dans un espace de couleur pour un certain nombre de pixels de l'image en couleurs (200), l'espace de couleur étant un espace de couleur RVB, un espace de couleur Lab, un espace de couleur LCh, un espace de couleur HSV, un espace de couleur XYZ ou un espace de couleur YUV et les valeurs de couleur de pixel sont des valeurs de couleur RVB, des valeurs de couleur Lab, des valeurs de couleur LCh, des valeurs de couleur HSV, des valeurs de couleur XYZ ou des valeurs de couleur YUV ;

un dispositif d'évaluation (103) permettant de générer une distribution de fréquence pour chaque point dans l'espace de couleur sur la base des valeurs de couleur de pixel ;

un dispositif de génération d'espace de paramètres (105) permettant de générer un espace de paramètres en totalisant la distribution de fréquence au sein d'une plage de tolérance prédéterminée autour de certaines valeurs de couleur centrales, le dispositif de génération d'espace de paramètres (105) étant conçu pour pondérer la distribution de fréquence au sein de la plage de tolérance prédéterminée avec une fonction de pondération, la plage de tolérance étant définie par une distance euclidienne par rapport aux valeurs de couleur centrales ; et

un dispositif de détermination (107) permettant de déterminer la valeur de couleur à l'aide d'un maximum dans l'espace de paramètres.

2. Agencement de capteurs selon la revendication 1, la pondération par la fonction de pondération diminuant vers les limites de la plage de tolérance.

3. Agencement de capteurs selon la revendication 1 ou 2, la pondération par la fonction de pondération étant maximale au centre de la plage de tolérance.

4. Agencement de capteurs selon l'une des revendications précédentes, les valeurs de couleur centrales se trouvant sur une trame dans l'espace de couleur.

5. Agencement de capteurs selon la revendication 4, les points de trame de la trame sont équidistants les uns par rapport aux autres.

**6.** Agencement de capteurs selon l'une des revendications précédentes, une plage de définition de la distribution de fréquence ou de l'espace de paramètres étant délimitée par des valeurs de seuil prédéterminées.

**7.** Agencement de capteurs selon l'une des revendications précédentes, le dispositif d'évaluation (103) étant conçu pour générer une distribution de fréquence à partir des valeurs de couleur de pixel d'une zone d'image prédéterminée.

**8.** Agencement de capteurs selon l'une des revendications précédentes, le maximum étant un maximum global ou local dans l'espace de paramètres.

**9.** Procédé permettant de déterminer une valeur de couleur dans une image en couleurs comprenant les étapes consistant à :

génerer (S101) une distribution de fréquence pour chaque point dans un espace de couleur à partir des valeurs de couleur de pixel des pixels de l'image en couleurs (200), l'espace de couleur étant un espace de couleur RVB, un espace de couleur Lab, un espace de couleur LCh, un espace de couleur HSV, un espace de couleur XYZ ou un espace de couleur YUV et les valeurs de couleur de pixel étant des valeurs de couleur RVB, des valeurs de couleur Lab, des valeurs de couleur LCh, des valeurs de couleur HSV, des valeurs de couleur XYZ ou des valeurs de couleur YUV, la distribution de fréquence étant pondérée au sein d'une plage de tolérance prédéterminée avec une fonction de pondération, la plage de tolérance étant définie par une distance euclidienne par rapport aux valeurs de couleur centrales ;
génerer (S102) un espace de paramètres en totalisant la distribution de fréquence au sein de la plage de tolérance prédéterminée autour de valeurs de couleur centrales déterminées, la plage de tolérance étant définie par une distance euclidienne par rapport aux valeurs de couleur centrales et ;
déterminer (S103) la valeur de couleur à l'aide d'un maximum dans l'espace de paramètres.

**10.** Procédé selon la revendication 9, la distribution de fréquence étant générée à partir des valeurs de couleur de pixel d'une zone d'image prédéterminée.

**11.** Produit de programme informatique, qui peut être téléchargé directement dans la mémoire interne d'un ordinateur numérique, et qui comprend des segments de programme, avec lesquels le procédé selon les revendications 9 à 10 est exécuté, lorsque le programme est exécuté dans un ordinateur.

Fig. 1

Fig. 2

Fig. 3

EP 2 919 195 B1

14

Fig. 4

Fig. 5

**IN DER BESCHREIBUNG AUFGEFÜHRTE DOKUMENTE**

**In der Beschreibung aufgeführte Patentdokumente**

- DE 10140660 A1
- DE 19638065 A1
- DE 4132754 A1
- US 5222154 A